# EUROPEAN PATENT APPLICATION

(11) **EP 4 799 463 A1**
(43) Date of publication of application: **02.09.2026**
(21) Application number: 24882434.4
(22) Date of filing: 24.10.2024
(51) Int. Cl.: A01D 34/68, A01B 51/02, A01D 34/64, A01D 34/69, B60K 1/04, B60K 11/04

(54) **WORK VEHICLE**

(30) Priority: 26.10.2023 JP 2023183672
(71) Applicant: Iseki & Co., Ltd., Matsuyama-shi, Ehime 799-2655 (JP)
(72) Inventor: MASUDA Ryutaro, Iyo-gun, Ehime 791-2111 (JP)
(74) Representative: TBK
(86) International application number: PCT/JP2024/037868
(87) International publication number: WO 2025/089323

(57) **Abstract**

In a work vehicle provided with driving wheels 2, 3, a body frame 1 provided with a work device 4, and an operating portion 5 at an upper side of the body frame 1 on which an operator rides, there is provided an electric motor compartment 8 that stores a first electric motor 30 driving the work device 4 and a second electric motor 40 driving the driving wheels 2, 3, a longitudinal direction of the first electric motor 30 extends along a fore-and-aft direction, a longitudinal direction of the second electric motor 40 extends along the fore-and-aft direction, and the first electric motor 30 and the second electric motor 40 are arranged side by side in a lateral direction, whereby equipment is efficiently disposed in a space in the work vehicle including a plurality of electric motors.

## Description

### TECHNICAL FIELD

The present invention relates to a work vehicle for mowing grass.

### BACKGROUND ART

A work vehicle is known in which a work device for mowing grass is disposed between front wheels and rear wheels, a battery is disposed in a hood on the front side of an operating portion, an electric motor driving the rear wheels is disposed at an upper side of a rear portion of the vehicle with an output shaft directed in a lateral direction, and an electric motor driving the work device is disposed at a lower side of the rear portion of the vehicle with an output shaft directed in a fore-and-aft direction (Patent Document 1).

### PRIOR ART DOCUMENT

### PATENT DOCUMENT

Patent Document 1: Japanese Patent Application Publication No. 2023-27497

### SUMMARY OF INVENTION

### TECHNICAL PROBLEM

In the means of Patent Document 1, a plurality of motors are disposed with output shafts directed in the lateral direction or the fore-and-aft direction and are accommodated in a space. However, there has been a problem that when the size of the motor increases, a dead space is generated or the motors cannot be accommodated in an electric motor compartment.

Accordingly, an object of the present invention is to provide a work vehicle including a plurality of electric motors, in which equipment is efficiently disposed in a space.

### SOLUTION TO PROBLEM

The present invention which has solved the above problem is as follows. That is, the present invention is a work vehicle provided with driving wheels (2, 3), a work device (4) on a body frame (1), and an operating portion (5) at an upper side of the body frame (1) on which an operator rides, the work vehicle comprising: an electric motor compartment (8) that stores a first electric motor (30) driving the work device (4) and a second electric motor (40) driving the driving wheels (2, 3), wherein a longitudinal direction of the first electric motor (30) extends along a fore-and-aft direction, a longitudinal direction of the second electric motor (40) extends along the fore-and-aft direction, and the first electric motor (30) and the second electric motor (40) are arranged side by side in a lateral direction.

### ADVANTAGEOUS EFFECTS OF INVENTION

According to the present invention, the first electric motor (30) and the second electric motor (40) can be efficiently disposed in the space of the electric motor compartment (8).

### BRIEF DESCRIPTION OF DRAWINGS

FIG. 1 is a perspective view of a work vehicle as viewed from the front left side.
FIG. 2 is a perspective view of a front portion of an electric motor compartment as viewed from the rear left side.
FIG. 3 is a perspective view of a rear portion of the electric motor compartment as viewed from the rear left side.
FIG. 4 is a plan view of the electric motor compartment.
FIG. 5 is a perspective view of electric motors as viewed from the rear left side.
FIG. 6 is a plan view of the electric motors.
FIG. 7 is a rear view of the electric motors.
FIG. 8 is a perspective view of a battery as viewed from the rear left side.
FIG. 9 is a plan view of the electric motor compartment on which the battery is mounted.
FIG. 10 is a plan view of the electric motors and inverter devices.
FIG. 11 is a left side view of the electric motors and the inverter devices.
FIG. 12 is a transmission diagram of output rotation of the electric motors.
FIG. 13 is a left side view of the electric motor compartment.
FIG. 14 is a perspective view of the electric motor compartment as viewed from the rear right side.
FIG. 15 is an explanatory diagram of flow paths of water circulating through an electrical component unit and the like.

### DESCRIPTION OF EMBODIMENTS

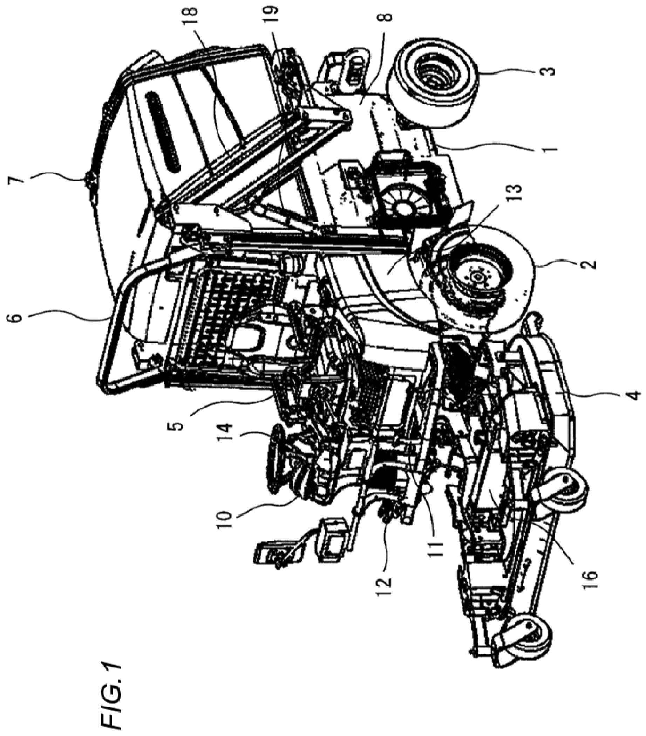

As shown in FIG. 1, the work vehicle is provided with a pair of left and right front wheels 2 at a front portion of a lower side of a body frame 1, and a pair of left and right rear wheels 3 at a rear portion of the lower side of the body frame 1.

A work device 4 for mowing lawn grass grown in a field is provided at the front portion of the body frame 1, and an operating portion 5 on which an operator rides is provided at the rear side of the work device 4. A safety frame (ROPS) 6 for protecting the operator is provided at the rear side of the operating portion 5, and a grass collecting container 7 storing the mowed lawn grass is provided at the rear side of the safety frame 6. An electric motor compartment 8 in which a second electric motor 40 driving the rear wheels 3, a battery 50, and the like are disposed is provided at the lower side of the grass collecting container 7.

A steering column 10 that supports a steering wheel is provided at the front side of an operator's seat of the operating portion 5. A monitor that displays the output rotation speed and the like of the second electric motor 40 is provided at an upper portion of the steering column 10, and a lower portion thereof is fixed to a front portion of a floor.

A brake pedal 11 for decelerating the rotation speed of the front wheels 2 is provided at the left side of the steering column 10 on the floor, and a speed change pedal 12 for increasing or decreasing the output rotation speed of the second electric motor 40 is provided at the right side.

The upper side of the front wheels 2 is covered with fenders 13, and a speed change lever 14 for operating a second inverter device 45 that increases or decreases the output rotation of the second electric motor 40 is provided on the fender 13 located at the right side of the operator's seat.

The rear portion of the work device 4 and the front portion of the grass collecting container 7 are communicated by a shooter 16 extending in the fore-and-aft direction, and a blower 17 for discharging air into the shooter 16 is provided at an intermediate portion in the fore-and-aft direction of the shooter 16.

A pair of left and right link arms 18 are provided at front portions of left and right walls of the grass collecting container 7. Front portions of the link arms 18 are swingably fixed to left and right portions of the safety frame 6, and the safety frame 6 and the link arms 18 are connected by lifting/lowering parts 19 such as hydraulic cylinders. A rear portion of a lower wall of the grass collecting container 7 is mounted on a horizontal frame 21A of a support frame 21 described later. Thus, the grass collecting container 7 can be lifted and lowered by driving the lifting/lowering parts 19.

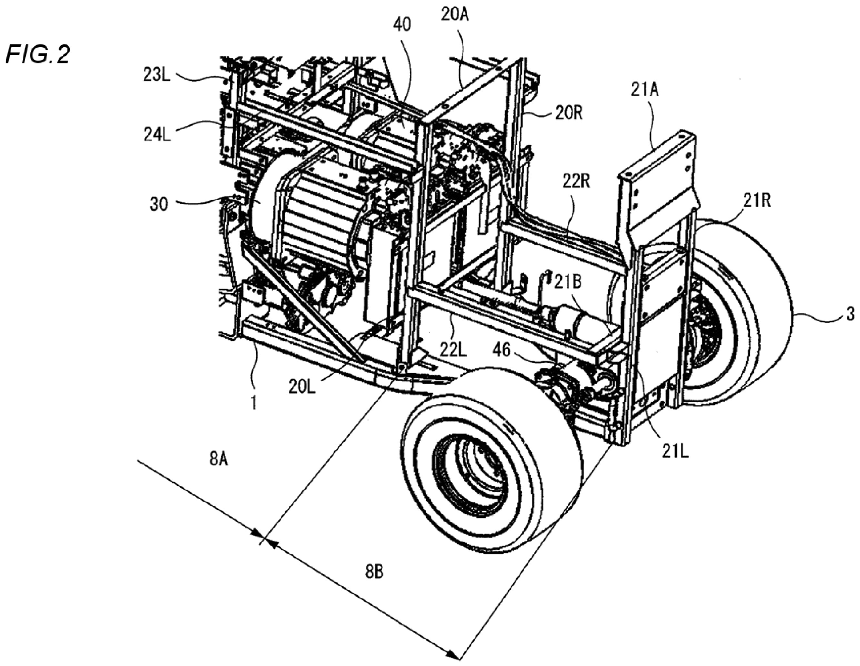

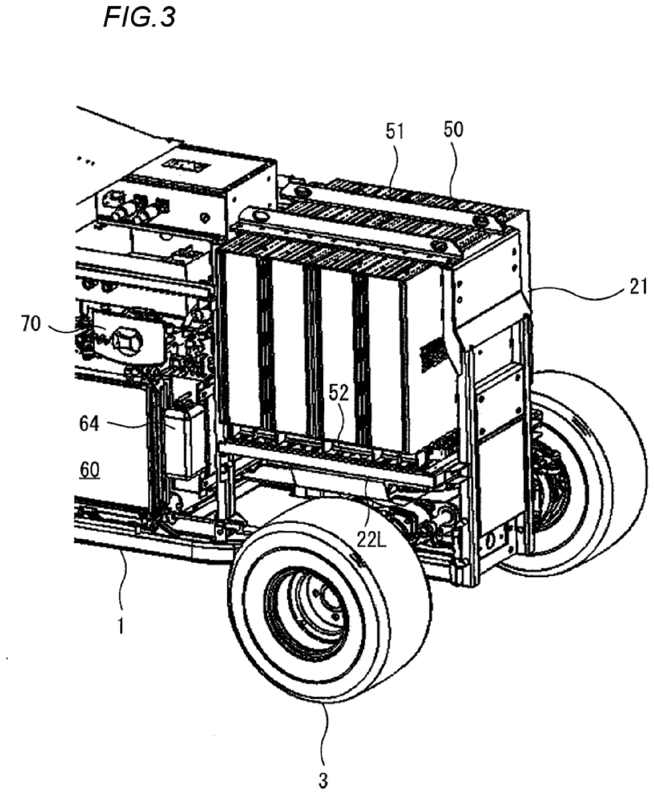

As shown in FIGS. 2 and 3, a front electric motor compartment 8A of the electric motor compartment 8 is provided with a first electric motor 30 for work for driving the work device 4 and a second electric motor 40 for traveling for driving the front wheels 2. A rear electric motor compartment 8B is provided with a battery 50 that stores electric power to be supplied to the first electric motor 30 and the like.

In a plan view, the first electric motor 30 is provided at the left side of a center line in the lateral direction of the body frame 1, and the second electric motor 40 is provided at the right side of the center line in the lateral direction of the body frame 1. Accordingly, a weight difference between the weight applied to the left side of the center line in the lateral direction of the body frame 1 and the weight applied to the right side of the center line in the lateral direction of the body frame 1 can be suppressed, and steerability can be improved.

In a side view, a support frame 20 extending upward from the body frame 1 is provided in a partition portion between the front electric motor compartment 8A and the rear electric motor compartment 8B, and a support frame 21 extending upward from the body frame 1 is provided at a rear end portion of the rear electric motor compartment 8B.

The support frame 20 is formed of a left vertical frame 20L extending upward from an intermediate portion at the left side of the body frame 1, a right vertical frame 20R extending upward from an intermediate portion at the right side of the body frame 1, and a horizontal frame 20A extending in the lateral direction and connecting upper portions of the left vertical frame 20L and the right vertical frame 20R.

The support frame 21 is formed of a left vertical frame 21L extending upward from a rear end portion at the left side of the body frame 1, a right vertical frame 21R extending upward from a rear end portion at the right side of the body frame 1, a horizontal frame 21A extending in the lateral direction and connecting upper portions of the left vertical frame 21L and the right vertical frame 21R, and a horizontal frame 21B extending in the lateral direction and connecting intermediate portions of the left vertical frame 21L and the right vertical frame 21R. Note that a left portion of the horizontal frame 21B extends to the left side of the left vertical frame 21L, and a right portion thereof extends to the right side of the right vertical frame 21R.

The intermediate portion of the left vertical frame 20L and the left end portion of the horizontal frame 21B are connected by a left fore-and-aft frame 22L extending in the fore-and-aft direction, and the intermediate portion of the right vertical frame 20R and the right end portion of the horizontal frame 21B are connected by a right fore-and-aft frame 22R extending in the fore-and-aft direction. Accordingly, the rear portion of the battery 50 can be disposed above a drive shaft 46 of the rear wheels 3, and a large deformation of the body frame 1 can be prevented.

The upper portion of the left vertical frame 20L and an intermediate portion of a left vertical frame 23L provided at a rear portion of the operating portion 5 are connected by a left fore-and-aft frame 24L extending in the fore-and-aft direction, and the upper portion of the right vertical frame 20R of the support frame 20 and an intermediate portion of a right vertical frame 23R provided at the rear portion of the operating portion 5 are connected by a right fore-and-aft frame 24R extending in the fore-and-aft direction.

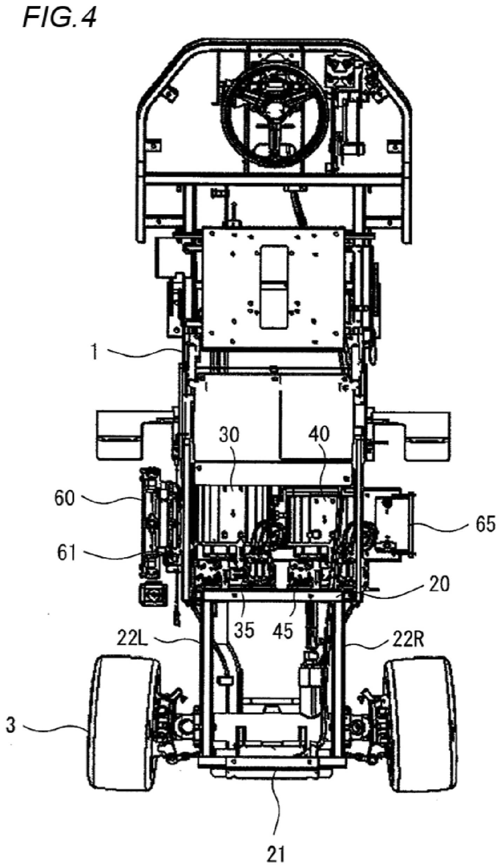

As shown in FIG. 4, the longitudinal direction of the first electric motor 30 extends along the fore-and-aft direction. The second electric motor 40 is provided adjacent to the right side of the first electric motor 30, and the longitudinal direction of the second electric motor 40 extends along the fore-and-aft direction.

A radiator 60 cooling water that cools the first electric motor 30 and the like is provided at the outside of a left wall of the electric motor compartment 8, and a fan 61 blowing outside air toward the electric motor compartment 8 is provided between the radiator 60 and the first electric motor 30. A circular opening (not shown) is formed in a portion of the left wall of the electric motor compartment 8 facing the fan 61. Accordingly, a temperature rise of the first electric motor 30 and the like can be suppressed, and the first electric motor 30 and the like can be prevented from malfunctioning. Note that the fan 61 can also be provided at the left side of the radiator 60.

An auxiliary battery 65 storing electric power to be supplied to the monitor of the operating portion 5 is provided at the outside of a portion of a right wall of the electric motor compartment 8 facing the radiator 60. Accordingly, a weight difference between the left portion and the right portion of the work vehicle can be suppressed.

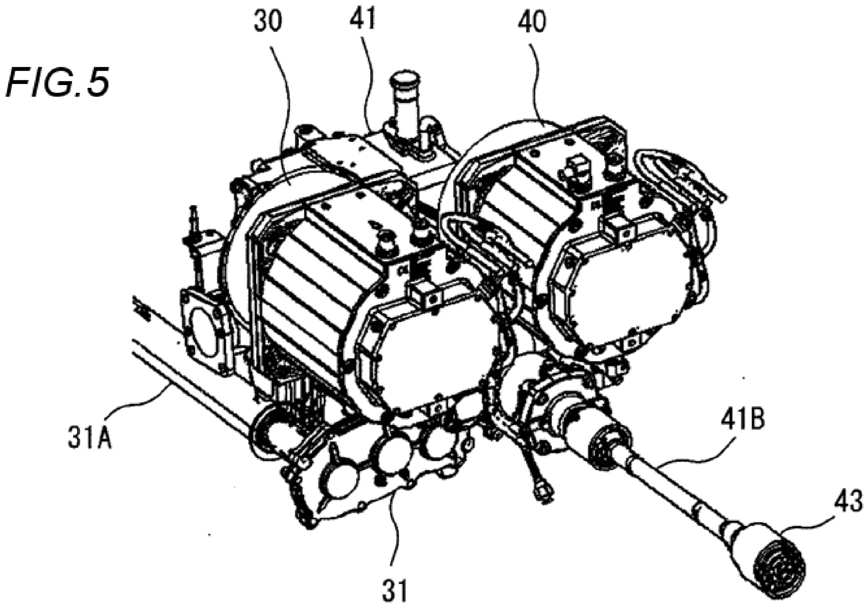

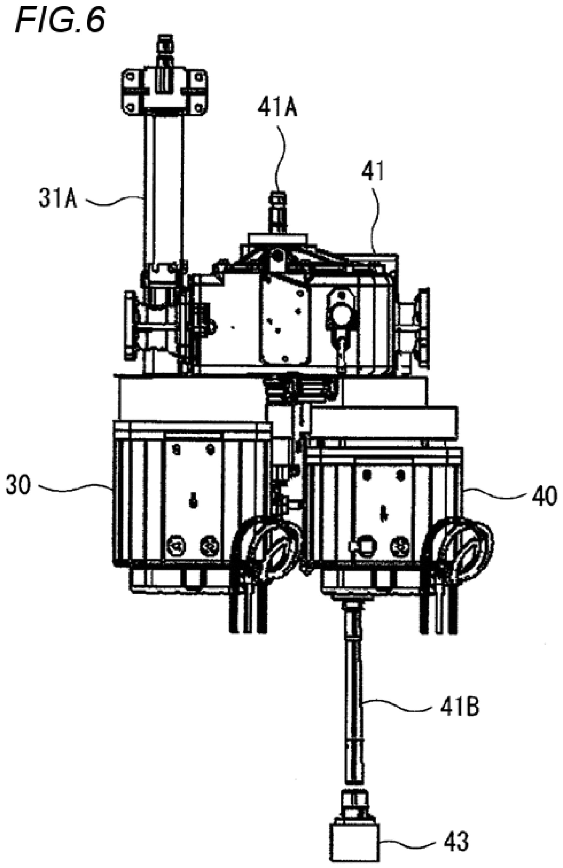

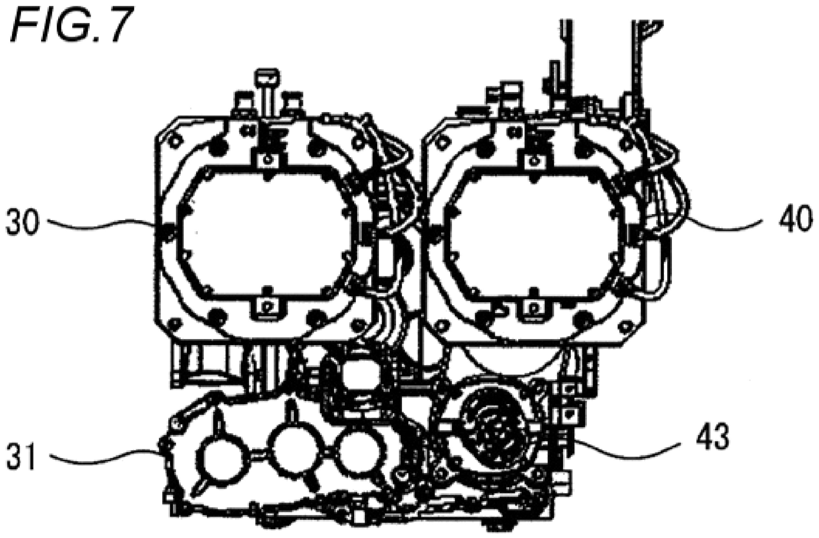

As shown in FIGS. 5 to 7, an output shaft 30A of the first electric motor 30 is connected to a first reduction gear 31 provided at the lower side of the first electric motor 30. A first output shaft 31A of the first reduction gear 31 extends forward and is connected to a work clutch 32 provided between the first reduction gear 31 and a transmission path of the work device 4.

An output shaft 40A of the second electric motor 40 is connected to a second reduction gear 41 provided at the front side of the second electric motor 40. A second output shaft 41A of the second reduction gear 41 extends forward, and an output shaft 41B extends backward and is connected to a 4WD clutch 43 that performs switching between front wheel drive and four-wheel drive provided between the second reduction gear 41 and a transmission path of the rear wheels 3.

In a rear view, the first electric motor 30 and the second electric motor 40 are disposed at the same height in the vertical direction. Accordingly, by providing the first electric motor 30 and the second electric motor 40 at the lower portion of the front electric motor compartment 8A, a space for providing a monitoring unit 72 for monitoring the state of the battery 50 at the upper side of the first electric motor 30 and the second electric motor 40 can be secured.

Although FIGS. 5 to 7 and the like illustrate the first electric motor 30 and the second electric motor 40 having the same size, the first electric motor 30 can be changed to an electric motor larger than the second electric motor 40. Accordingly, the work device 4 which is constantly driven and to which a large load is applied can be smoothly driven.

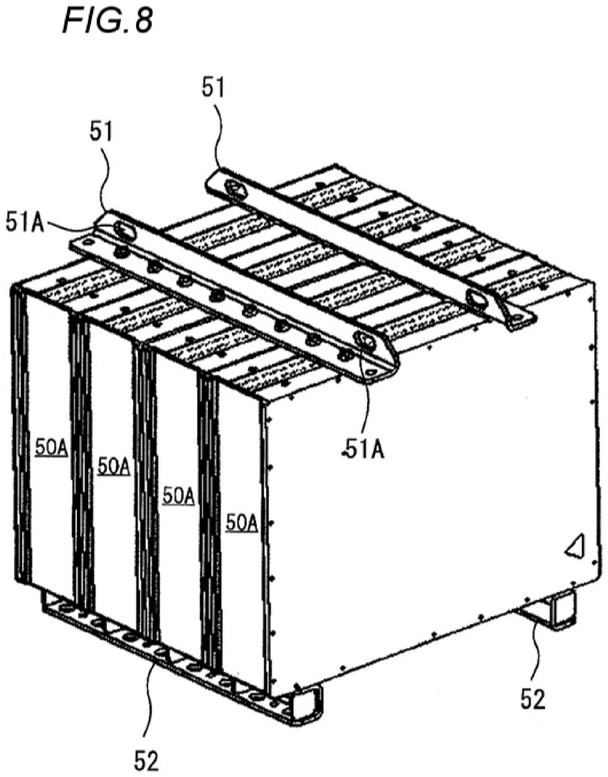

As shown in FIG. 8, the battery 50 is formed of four battery modules 50A. Upper portions of the four battery modules 50A are connected by a pair of left and right angle-shaped mounting frames 51 extending in the fore-and-aft direction provided with a predetermined interval in the lateral direction, and lower portions thereof are connected by a pair of left and right square pipe-shaped mounting frames 52 extending in the fore-and-aft direction provided with a predetermined interval in the lateral direction.

A front portion of the mounting frame 51 extends to the front side of the battery 50, and a rear portion thereof extends to the rear side of the battery 50. Further, the mounting frame 52 is formed to extend from a front end portion to a rear end portion of the battery 50.

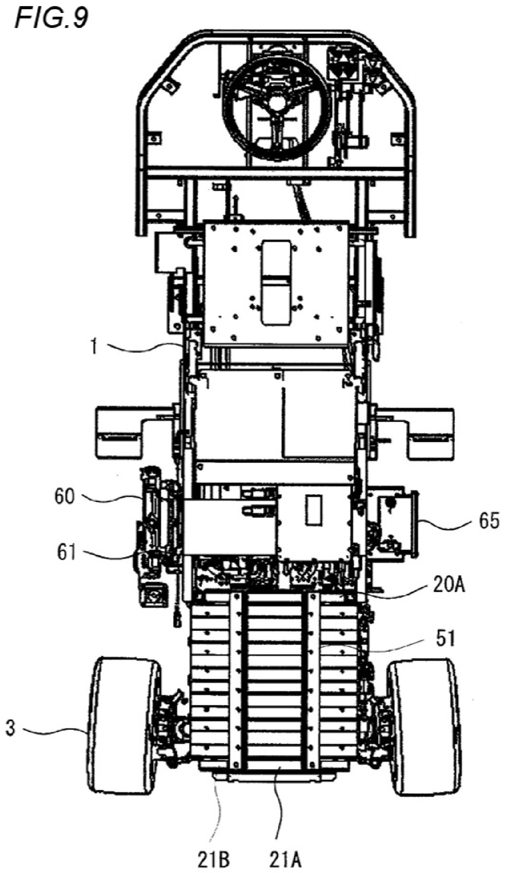

As shown in FIGS. 3 and 9, the front portion of the mounting frame 51 is detachably fixed to the horizontal frame 20A of the support frame 20 by a fastening member such as a bolt, and the rear portion thereof is detachably fixed to the horizontal frame 21A of the support frame 21 by a fastening member such as a bolt.

The left mounting frame 52 is mounted on the left fore-and-aft frame 22L, and the right mounting frame 52 is mounted on the right fore-and-aft frame 22R.

Openings 51A through which suspension hooks are inserted when replacing the battery 50 are formed in the front portion and the rear portion of the mounting frame 51. Thus, the battery 50 can be easily attached to and detached from the support frame 20 and the support frame 21, and the battery 50 can be easily replaced.

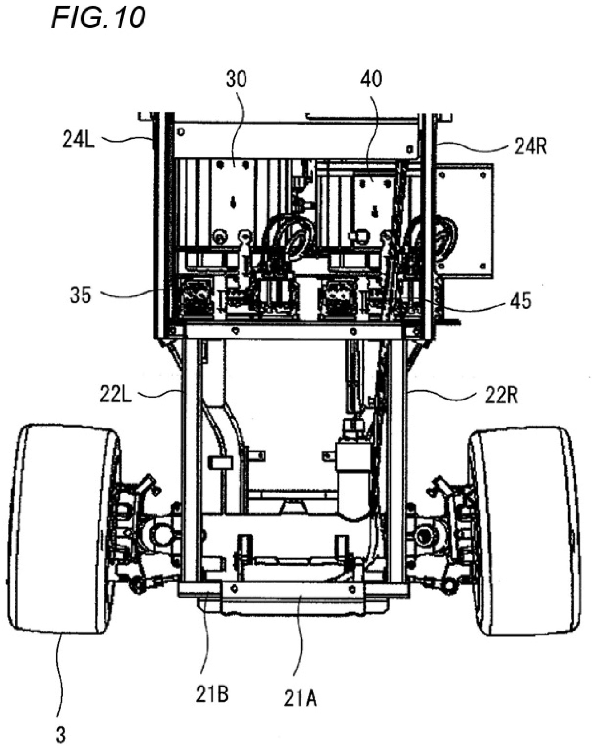

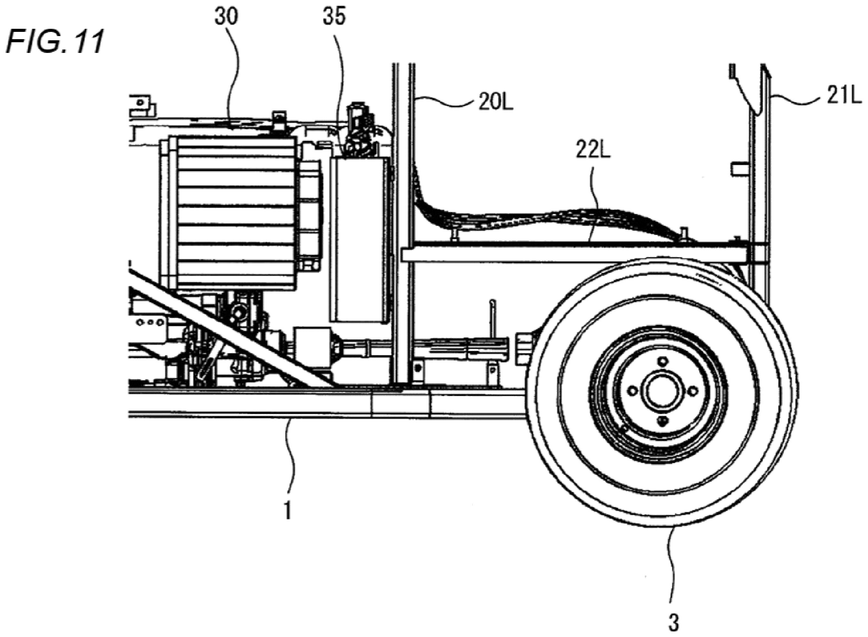

As shown in FIGS. 10 and 11, a first inverter device 35 driving the first electric motor 30 is provided at the rear side of the first electric motor 30 with a predetermined interval in the fore-and-aft direction, and a second inverter device 45 driving the second electric motor 40 is provided at the rear side of the second electric motor 40 with a predetermined interval in the fore-and-aft direction. Further, the first inverter device 35 and the second inverter device 45 are provided at the front side of the battery 50 with a predetermined interval in the fore-and-aft direction. Accordingly, routing of the first electric motor 30, the second electric motor 40, the first inverter device 35, and the second inverter device 45 can be easily performed. Further, air blown from the fan 61 passes through gaps between the first and second electric motors 30, 40 and the first and second inverter devices 35, 45, and thus the first and second electric motors 30, 40 and the first and second inverter devices 35, 45 can be efficiently cooled.

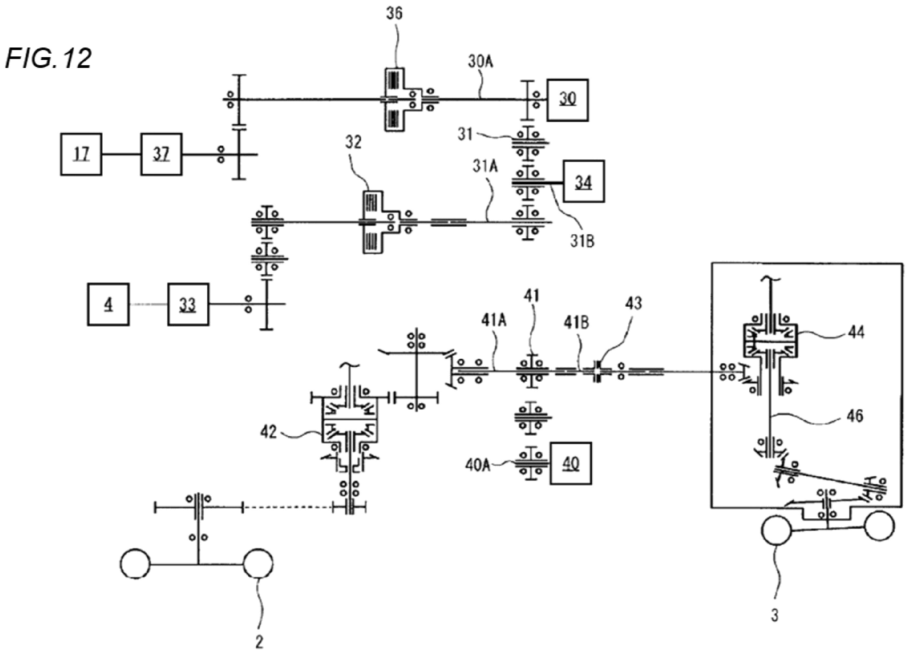

As shown in FIG. 12, the output rotation of the output shaft 30A of the first electric motor 30 is decelerated by the first reduction gear 31 and then output from the first output shaft 31A and the output shaft 31B of the first reduction gear 31.

The output rotation of the first output shaft 31A is transmitted to a work PTO 33 via the work clutch 32 to drive the work device 4. Further, the output rotation of the output shaft 31B is transmitted to a hydraulic pump 34 that pumps oil to be supplied to the lifting/lowering parts 19 and the like.

Further, the output rotation of the output shaft 30A of the first electric motor 30 is transmitted to a blower PTO 37 via a blower clutch 36 to drive the blower 17.

The output rotation of the output shaft 40A of the second electric motor 40 is decelerated by the second reduction gear 41 and then output from the second output shaft 41A of the second reduction gear 41.

The output rotation of the second output shaft 41A is transmitted to a differential gear 42 for front wheels to drive the front wheels 2, and is also transmitted to a differential gear 44 for rear wheels via the 4WD clutch 43. The output rotation of the differential gear 44 is transmitted to the drive shaft 46 to drive the rear wheels 3.

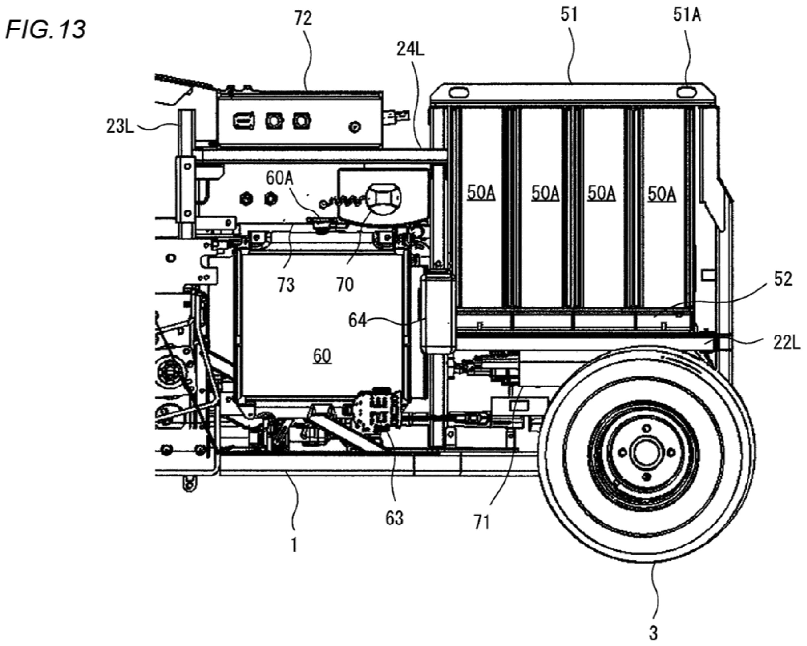

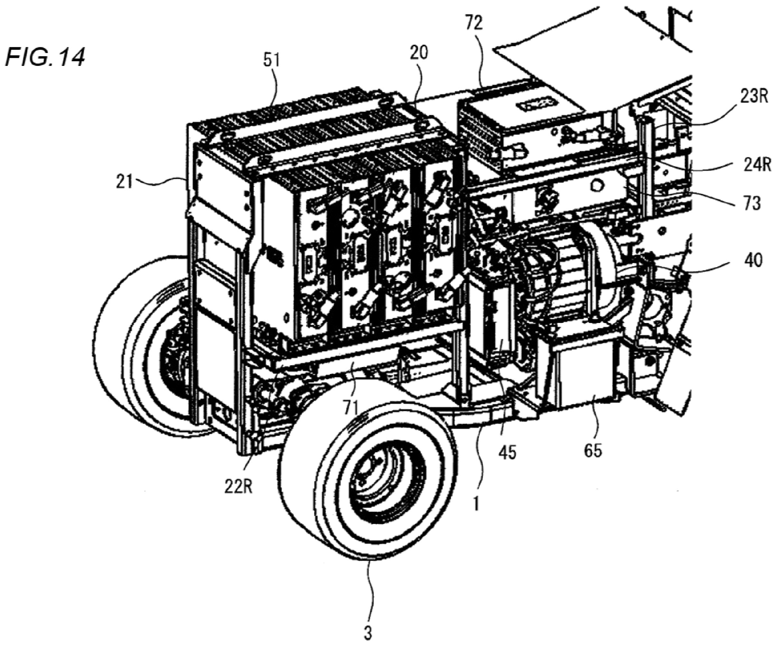

As shown in FIGS. 13 and 14, a power receiving port 70 for receiving electric power from a household power source is provided at the upper rear side of the radiator 60.

At the lower side of the battery 50, there is provided an electrical component unit 71 including a charger 71A that converts electric power supplied to the power receiving port 70 from AC to DC and supplies it to the battery 50, and a converter 71B that steps down a DC voltage supplied via a power distribution unit 73 or the like to the rated voltage of the auxiliary battery 65. Note that the electrical component unit 71 is detachably fixed to the lower side of the left fore-and-aft frame 22L and the right fore-and-aft frame 22R.

At the front side of the battery 50, there is provided a monitoring unit 72 including a monitoring device that monitors the temperature and voltage of the battery 50. The monitoring unit 72 is detachably fixed to the upper side of the left fore-and-aft frame 24L and the right fore-and-aft frame 24R.

In a side view, an upper wall of the monitoring unit 72 is preferably located lower than the mounting frame 51. Accordingly, the monitoring unit 72 is prevented from protruding upward from the mounting frame 51, and the height in the vertical direction of the electric motor compartment 8 can be formed low. Therefore, the center of gravity of the grass collecting container 7 disposed at the upper side of the electric motor compartment 8 can be provided at a low position, and the work vehicle can travel stably.

At the lower side of the monitoring unit 72, there is provided a power distribution unit 73 including a terminal block that distributes electric power supplied from the monitoring unit 72 to the first inverter device 35, the second inverter device 45, the converter 71B of the electrical component unit 71, and the like. The power distribution unit 73 is detachably fixed to the lower side of the left fore-and-aft frame 24L and the right fore-and-aft frame 24R.

A pressure valve 60A is provided at an upper portion of the radiator 60, and a cooling pump 63 for pumping water cooled by the radiator 60 is provided at the lower rear side of the radiator 60. A reserve tank 64 storing preliminary water circulating through the radiator 60 is provided at the rear side of the radiator 60.

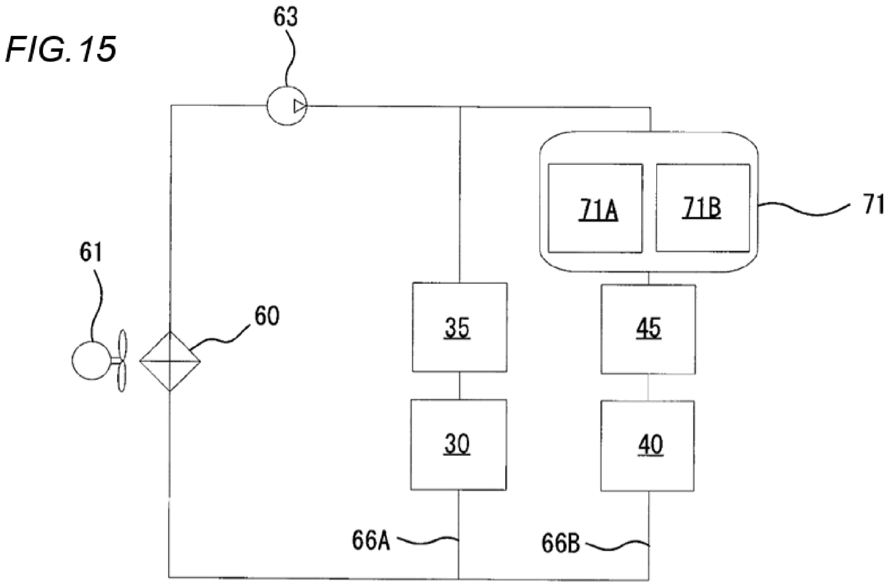

As shown in FIG. 15, water pumped from the cooling pump 63 flows into a flow path 66A that circulates through a cooling member attached to the first electric motor 30 and a cooling member attached to the first inverter device 35 and returns to the radiator 60, and a flow path 66B that circulates through a cooling member attached to the electrical component unit 71, a cooling member attached to the second electric motor 40, and a cooling member attached to the second inverter device 45 and returns to the radiator 60. Accordingly, the first electric motor 30, which outputs high torque for driving the work device 4 and generates more heat than the second electric motor 40, can be efficiently cooled.

The cooling member attached to the electrical component unit 71 is provided at the upper side of the cooling pump 63. In a side view, a liquid level of the cooling member attached to the electrical component unit 71, liquid levels of the cooling members attached to the first inverter device 35 and the second inverter device 45, and liquid levels of the cooling members attached to the first electric motor 30 and the second electric motor 40 are provided in this order from the lower side. The liquid levels of the cooling members attached to the first electric motor 30 and the second electric motor 40 are provided at the highest position. Further, in a side view, the pressure valve 60A of the radiator 60 is provided at a position higher than the liquid levels of the cooling members attached to the first electric motor 30 and the second electric motor 40. Accordingly, air in the cooling pump 63 is exhausted to the outside from the pressure valve 60A of the radiator 60 together with water via the cooling member attached to the electrical component unit 71 and the like, so that air entrainment of the cooling pump 63 can be suppressed and failure of the cooling pump 63 can be prevented. Note that the liquid level referred to in the present specification refers to an upper surface of water flowing into the cooling member attached to the electrical component unit 71 when the work vehicle is stopped at a horizontal position in a side view.

## Claims

1. A work vehicle provided with driving wheels (2, 3), a body frame (1) provided with a work device (4), and an operating portion (5) at an upper side of the body frame (1) on which an operator rides,
the work vehicle comprising:
an electric motor compartment (8) that stores a first electric motor (30) driving the work device (4) and a second electric motor (40) driving the driving wheels (2, 3),
**characterized in that**
a longitudinal direction of the first electric motor (30) extends along a fore-and-aft direction, a longitudinal direction of the second electric motor (40) extends along the fore-and-aft direction, and the first electric motor (30) and the second electric motor (40) are arranged side by side in a lateral direction.

2. The work vehicle according to claim 1, wherein the first electric motor (30) and the second electric motor (40) are provided at the same height in a vertical direction.

3. The work vehicle according to claim 1, wherein the first electric motor (30) is an electric motor capable of outputting a higher torque than the second electric motor (40).

4. The work vehicle according to claim 1, further comprising:
a fan (61) blowing outside air into the electric motor compartment (8), at one lateral side of the electric motor compartment (8).

5. The work vehicle according to claim 4, further comprising:
a radiator (60) cooling water circulating through the first electric motor (30) and the second electric motor (40), at one lateral side of the fan (61).

6. The work vehicle according to claim 4, further comprising:
a battery (50) storing electric power to be supplied to the first electric motor (30) and the second electric motor (40), at a rear portion of the electric motor compartment (8);
a first inverter device (35) driving the first electric motor (30), between the first electric motor (30) and the battery (50); and
a second inverter device (45) driving the second electric motor (40), between the second electric motor (40) and the battery (50).

7. The work vehicle according to claim 6, wherein the battery (50) is provided so as to overlap an upper side of a drive shaft (46) extending in the lateral direction of rear wheels (3) in a plan view.
